Europäisches Patentamt

European Patent Office

Office européen des brevets

(11) Veröffentlichungsnummer: **0 186 864**
**A1**

## (12) EUROPÄISCHE PATENTANMELDUNG

(21) Anmeldenummer: 85116255.2

(22) Anmeldetag: 19.12.85

(51) Int. Cl.⁴: **G06F 7/52**

(30) Priorität: 27.12.84 DE 3447493

(43) Veröffentlichungstag der Anmeldung:
09.07.86 Patentblatt 86/28

(84) Benannte Vertragsstaaten:
AT DE FR GB IT NL SE

(71) Anmelder: **Siemens Aktiengesellschaft
Berlin und München Wittelsbacherplatz 2
D-8000 München 2(DE)**

(72) Erfinder: **Lechner, Alexander, Dr.
Dietrichsteinerstrasse 27
A-9583 Faak/See(AT)**

(54) **Schneller digitaler Multiplizierer.**

(57) Zur Verringerung der Multiplikationszeiten arbeitet ein digitaler serieller Multiplizierer mit einem hochfrequenten intern erzeugten Takt. Ein als Oszillator vorgeschlagener Ringoszillator entspricht in seinem Aufbau dem Aufbau der Gatter des Rechenwerks (4, 5; 4, 5, 8) und ist mit seiner Taktfrequenz so an die mögliche Arbeitsfrequenz des Rechenwerks (4, 5; 4, 5, 8) paßt, daß dieses mit höchster Geschwindigkeit betrieben wird.

FIG 1

Schneller digitaler Multiplizierer

Die vorliegende Erfindung betrifft einen digitalen seriell arbeitenden Multiplizierer nach dem Oberbegriff des Patentanspruches 1.

Schnelle digitale Multiplizierer besitzen große Bedeutung in der digitalen Signalverarbeitung bei Echtzeitanwendungen oder bei einem großen Dynamikbereich. Beispielsweise stehen für Bildverarbeitungsroutinen bei einem hochauflösenden bewegten Bild nur ca. 50 ns zur Verfügung, während zur feinen Helligkeitsabstufung eine Datenwortbreite von 16 oder mehr als 16 binären Stellen notwendig ist. Weitere Einsatzgebiete sind schnelle Rechenwerke, beispielsweise mit Array-Prozessoren. Ein schneller 16x16-Bit-Multiplizierer der Typ MPY 016 K der Fa. TRW Vertriebs-GmbH ist in der Zeitschrift Elektronik, Nr. 4, 1984 auf Seite 100 vorgestellt, der eine typische Zykluszeit von 45 ns besitzt.

Grundsätzlich lassen sich zwei Multipliziertypen unterscheiden. Parallel arbeitende Multiplizierer sind in ihrer Struktur meist zweidimmensional als nxn große Matrix mit Halb- bzw. Volladdierern aufgebaut, wobei n die Anzahl der binären Stellen eines Datenwortes angibt. Die Multilikationszeiten sind gering und betragen etwa das n-fache der Addiererlaufzeiten, wenn man ein zusätzliches Carry-look-ahead Addierwerk (parallele Übertragslogik) verwendet, bei dem alle Überträge direkt aus den Eingangsvariablen berechnet werden. Da der Aufwand etwa quadratisch mit der Datenwortbreite ansteigt, besitzen parallele Multiplizierer mit großen Datenwortbreiten, eine große aktive Chipfläche, speziell bipolare Multiplizierer auch eine hohe Verlustleistung; dadurch steigen die Herstellungskosten entsprechend und die Ausbeuten sinken.

Bei seriell arbeitenden Multiplizierern wird nur eine Zeile der Matrix gebraucht, die mit Hilfe eines aus Master-Slave-Flip-Flops bestehenden Zwischenspeichers n-mal hintereinander zur Addition verwendet wird. Die Multiplikationszeiten hängen bei seriellen Multiplizierern im wesentlichen von der Taktfrequenz ab, da bei der Ausführung einer Multiplikation die erforderliche Anzahl der Takte proportional zur Datenwortbreite ist. Die durch die extern erzeugten Taktsignale bestimmte Verarbeitungsgeschwindigkeit beträgt in der Regel ein Mehrfaches gegenüber parallel arbeitenden Multiplizierern, dagegen reduzieren sich Aufwand und Verlustleistung um ein Vielfaches.

Der Erfindung liegt die Aufgabe zugrunde, einen digitalen seriell arbeitenden Multiplizierer anzugeben, der mit optimaler Arbeitsfrequenz betrieben wird und eine Verringerung der Multiplikationszeiten gewährleistet.

Diese Aufgabe wird bei einem digitalen seriell arbeitenden Multiplizierer der eingangs genannten Art erfindungsgemäß durch die Merkmale des kennzeichnenden Teils des Patentanspruchs 1 gelöst.

Weitere Ausgestaltungen des Erfindungsgedankens sind in Unteransprüchen gekennzeichnet.

Die Erfindung wird im folgenden anhand von in den Figuren der Zeichnung dargestellten Ausführungsbeispielen näher erläutert. Es zeigen:

Fig. 1 ein Blockschaltbild eines erfindungsgemäßen digitalen seriellen, nach dem Shift-und-Add-Verfahren arbeitenden Carry-Save-Multiplizierers und

Fig. 2 ein Blockschaltbild eines Multiplizierers nach Fig. 1 mit einem zusätzlichen Carry-look-ahead Addierwerk.

Grundgedanke der Erfindung ist es, die Multiplikationszeiten dadurch zu verringern, daß die Taktfrequenz und die Laufzeit der Multiplikationslogik aufeinander abgestimmt sind. Dazu wird der Multiplizierer mit einem hochfrequenten, intern erzeugten Takt betrieben. Die Taktgenerierung erfolgt mit Gattern, die in ihrem Aufbau dem Aufbau der Gatter des Rechenwerks entsprechen wobei die Taktfrequenz so gewählt wird, daß das Rechenwerk mit optimaler Geschwindigkeit arbeitet, d.h. an der Laufzeitgrenze betrieben werden kann. Zusätzlich wird durch den auf diese Art und Weise intern generierten Takt sichergestellt, daß das Rechenwerk auch bei Änderungen der Temperatur und der Versorgungsspannung sowie bei technologisch bedingten Toleranzen mit optimaler Frequenz arbeitet.

Als Oszillator wird beispielsweise ein in gleicher Technologie und Schaltungstechnik wie das Rechenwerk ausgeführter, an sich bekannter Ringoszillator vorgeschlagen.

Für seriell arbeitende Multiplizierer können zwei Gruppen von Multiplizierverfahren herangezogen werden, das Shiftund-Add-Verfahren und das Dekodierverfahren, z.B. nach dem Booth-Algorithmus. Ein erfindungsgemäßer digitaler seriell arbeitender Multiplizierer kann für alle in diese beiden Gruppen fallenden Multiplizierverfahren angewendet werden. Die in den Figuren erläuterten Ausführungsbeispiele der Erfindung beziehen sich auf nach dem Shiftund-Add-Verfahren arbeitende serielle Multipizierer.

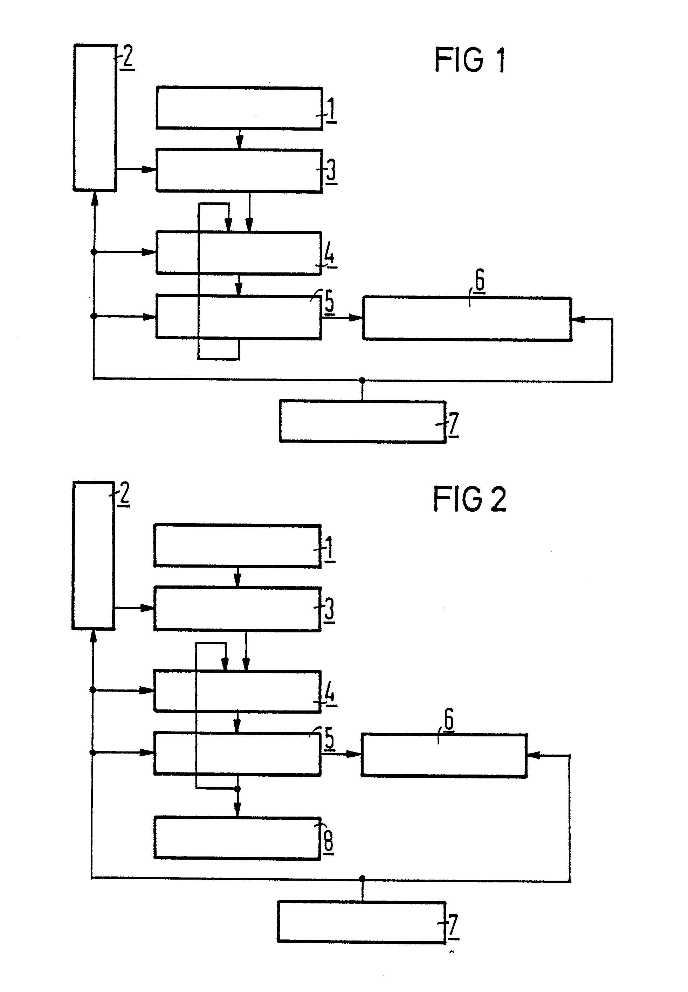

Fig. 1 stellt ein Blockschaltbild eines erfindungsgemäßen digitalen seriellen, nach dem Shift-und-Add-Verfahren arbeitenden Carry-Save-Multiplizierers dar. Ein erstes Datenwort ist in einem statischen Register 1 abgespeichert, das zweite Datenwort in einem Schieberegister 2. Die Multiplikation der beiden Datenworte erfolgt dadurch, daß jedes Bit des zweiten Datenwortes mit dem ersten Datenwort multipliziert wird, wozu aufgrund der zwei möglichen Zustände der Bits lediglich UND-Gatter 3 erforderlich sind. Anschließend werden die den einzelnen Bits des zweiten Datenwortes entsprechenden Zwischensummen der UND-Gatter 3 in einem Rechenwerk aufsummiert, das die Addierlogik 4 und Register 5 für die Zwischensummen und die nach dem Carry-Save-Prinzip gebildeten Überträge enthält. Das Ergebnis der Multiplikation wird in das Ausgangsschieberegister 6 ausgelesen, das 2 n Bit lang ist. Die ersten n Taktperioden des für die Ablaufsteuerung sorgenden Taktgenerators 7 dienen zur bitweisen Multiplikation der beiden Datenworte, die zweiten n Taktperioden zum Aufsummieren der letzten Zwischenergebnisse, d.h. im wesentlichen dem Durchschleifen des Übertrags.

In Fig. 2 ist das Blockschaltbild einer weiteren erfindungsgemäßen Ausführungsform eines digitalen seriell arbeitenden Multiplizierers dargestellt, der zusätzlich ein Carry-look-ahead Addierwerk 8 besitzt. Gleiche Elemente wie in Fig. 1 sind mit gleichen Bezugszeichen versehen. Das Carry-look-ahead Addierwerk 8 dient im Ausführungsbeispiel zum asynchronen Aufsummieren der letzen Zwischenergebnisse und ermöglicht eine weitere Verkürzung der Multiplikationszeiten. Nach Fig. 2 beträgt diese Multiplikationszeit die n-fache Taktperiodendauer plus die vom Carry-look-ahead Addierwerk 8 benötigte Zeit zum Berechnen der Überträge. Das Ausgangsschieberegister 6 benötigt in diesem Ausführungsbeispiel lediglich die Bitlänge n, da sämtliche Überträge direkt aus dem Carry-look-ahead Addierwerk 8 ausgelesen werden.

Eine weitere Möglichkeit zur Verringerung der Multiplikationszeiten besteht im Aufbau des Multiplizierers als 2-Phasen-System, bei dem jeweils eine Multiplikation beim Takt und Gegentakt ausgeführt werden. Das taktgesteuerte Rechenwerk nebst Registern ist zweizeilig aufgebaut und enthält in jeder Zeile eine der Datenwortbreite entsprechende Anzahl Addierer und als Latches ausgeführte Register zur Zwischenspeicherung der Überträge und der Zwischensummen. Ein derartig ausgeführter Multiplizierer ist Gegenstand der korrespondierenden Anmeldung VPA 84 E 1646 DE. Mit ihm ergibt sich die Multiplikationszeit als die n/2-fache Taktperiodendauer plus die für die Berechnung der Überträge benötigte Zeit des Carry-look-ahead Addierwerks $\underline{8}$.

Theoretisch kann die Taktfrequenz des internen Taktgenerators so gewählt werden, daß sie der Laufzeit des Rechenwerks entspricht, praktisch muß sie jedoch ausreichend weit unter der Laufzeitgrenze liegen, um Störsicherheit z.B. gegenüber Laufzeittoleranzen zu gewährleisten.

Mit der in den Figuren 1 und 2 zum Ausdruck kommenden Pipeline-Struktur läßt sich der digitale seriell arbeitende Multiplizierer in bekannten Technologien, z.B. TTL oder CMOS, jedoch zur Erzielung höchster Verarbeitungsgeschwindigkeiten vorteilhaft in ECL-Schaltungstechnik realisieren. Mit den in der Stromschaltertechnik möglichen 3 Seriesgating-Stufen läßt sich das Addierwerk vollständig in die Pipelineregister integrieren. Für die Register entfallen damit zusätzliche Laufzeiten. Berücksichtigt man noch, daß die einzelnen Stromschalter mit höherem Zwigstrom betrieben werden können, d.h. - schneller sind, weil ein seriell arbeitender Multiplizierer wesentlich weniger Verlustleistung verbraucht als ein parallel arbeitender, dann können die Multiplikationszeiten eines erfindungsgemäßen seriell arbeitenden digitalen Multiplizierers die Multiplikationszeiten eines parallelen digitalen Multiplizierers unterbieten. Beispielsweise benötigt ein erfindungsgemäßer serieller 32x32-Bit-Multiplizierer etwa 10% weniger Multiplikationszeit, ca. 60% weniger Verlustleistung, ca. 80% weniger Bauelemente und etwa 70% weniger aktiver Chipfläche als ein paralleler digitaler Multiplizierer in gleicher Technologie.

Für einen erfindungsgemäßen digitalen seriell arbeitenden Multiplizierer lassen sich vorteilhaft auch Dekodierverfahren heranziehen, beispielsweise der modifizierte Booth-Algorithmus, mit dem die Multiplizierzeit weiter verringert wird.

**Ansprüche**

1. Digitaler seriell arbeitender Multiplizierer mit einem statischen Register, UND-Gattern, mit einem taktgesteuerten Rechenwerk nebst Registern, **gekennzeichnet**durch eine interne Taktgenerierung.

2. Digitaler seriell arbeitender Multiplizierer nach Anspruch 1, **dadurch gekennzeichnet** , daß die Addiererlogik mit Registern (4, 5 ) ein zusätzliches, asynchron arbeitendes Carry-look-ahead Addierwerk (8) enthält.

3. Digitaler seriell arbeitender Multiplizierer nach Anspruch 1 oder 2, **dadurch gekennzeichnet**, daß die Taktgenerierung mit Gattern erfolgt, die technologisch und - schaltungstechnisch den Gattern des Rechenwerks ($\underline{4}$, $\underline{5}$ ; 4, 5, 8) entsprechen.

4. Digitaler seriell arbeitender Multiplizierer nach Anspruch 1 bis 3, **dadurch gekennzeichnet**, daß zur Taktgenerierung ein Ringozillator dient.

5. Digitaler seriell arbeitender Multiplizierer nach Anspruch 1 bis 4, **dadurch gekennzeichnet**, daß die Taktfrequenz unterhalb oder an der möglichen Arbeitsfrequenz der Gatter des Rechenwerks (4, 5; 4, 5, 8) liegt.

6. Digitaler seriell arbeitender Multiplizierer nach einem der Ansprüche 1 bis 5, **gekennzeichnet** durch einen doppelzeiligen Aufbau des taktgesteuerten Rechenwerks nebst Registern (2, 4, 5, 6).

7. Digitaler seriell arbeitender Multiplizierer nach einem der Ansprüche 1 bis 6, **dadurch gekennzeichnet**, daß eine Zeile des taktgesteuerten Rechenwerks nebst Registern (2, 4, 5, 6 ) vom Takt, die andere vom Gegentakt gesteuert wird.

8. Digitaler seriell arbeitender Multiplizierer nach einem der Ansprüche 1 oder 7, **dadurch gekennzeichnet**, daß je ein taktgesteuertes Schieberegister (2, 6) entweder nur Bits mit gerader oder ungerader Wertigkeit verarbeitet.

9. Digitaler seriell arbeitender Multiplizierer nach Anspruch 6, **dadurch gekennzeichnet**, daß die taktgesteuerten Schieberegister (2 , 6) halbe Datenwortlängen besitzen.

10. Digitalter seriell arbeitender Multiplizierer nach einem der Ansprüche 6 bis 9, **dadurch gekennzeichnet**, daß die für das taktgesteuerte Rechenwerk (4, 5) benötigten Register (5 ) nur Latches enthalten.

11. Digitaler seriell arbeitender Multiplizierer nach einem der Ansprüche 1 bis 10, **dadurch gekennzeichnet**, daß die Addierlogik (4) mit der Eingangsstufe der aus Latches bestehenden Register (5) kombiniert ist.

12. Digitaler seriell arbeitender Multiplizierer nach einem der Ansprüche 1 bis 11, **gekennzeichnet**durch einen Aufbau aus ECL-Stromschaltern.

13. Digitaler seriell arbeitender Multiplizierer nach einem der Ansprüche 1 bis 12, **gekennzeichnet**durch eine Arbeitsweise nach dem modifizierten Booth-Algorithmus.

FIG 1

FIG 2

Europäisches Patentamt

**EUROPÄISCHER RECHERCHENBERICHT**

Nummer der Anmeldung

EP 85 11 6255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| Y | RADIO FERNSEHEN ELEKTRONIK, Band 32, Nr. 8, August 1983, Seiten 487-490, Ost-Berlin, DD; F. MARKERT: "Schnelle Arithmetik für Mikrorechner"<br>* Seite 488, Spalte 3, Zeile 12 - Seite 489, Spalte 3, Zeile 41; Abbildung 1 * | 1,2,5, 6,8,9, 11 | G 06 F 7/52 |
| Y | FR-A-2 320 602 (C.I.T.-ALCATEL)<br>* Seite 2, Zeile 26 - Seite 3, Zeile 29; Abbildung * | 1,2,5, 6,8,9, 11,13 | |
| Y | EP-A-0 058 997 (NIPPON ELECTRIC CO. LTD.)<br>* Seite 14, Zeilen 15-24; Seite 16, Zeile 24 - Seite 17, Zeile 16; Abbildungen 3,5,6 * | 1,8,9, 13 | RECHERCHIERTE SACHGEBIETE (Int. Cl. 4) |
| A | PATENTS ABSTRACTS OF JAPAN, Band 6, Nr. 209 (P-150) [1087], 21. Oktober 1982; & JP - A - 57 114 941 (TOKYO SHIBAURA DENKI K.K.) 17.07.1982<br>* Zusammenfassung; Abbildung * | 6,7 | G 06 F 7/00 |

Der vorliegende Recherchenbericht wurde für alle Patentansprüche erstellt.

| Recherchenort | Abschlußdatum der Recherche | Prüfer |
|---|---|---|
| DEN HAAG | 21-03-1986 | NUSSBAUMER C.P. |